# EUROPÄISCHE PATENTSCHRIFT

(11) **EP 2 243 671 B1**
(45) Veröffentlichungstag und Bekanntmachung des Hinweises auf die Patenterteilung: **27.02.2019**
(21) Anmeldenummer: 10159962.9
(22) Anmeldetag: 15.04.2010
(51) Int. Cl.: B60S 1/04, B60S 1/38

(54) **Wischerblatt und Scheibenwischersystem**
Wiper blade and screen washing system
Balai d'essuie-glace et système d'essuie-glace

(30) Priorität: 21.04.2009 DE 102009002523
(43) Veröffentlichungstag der Anmeldung: 27.10.2010
(73) Patentinhaber: Robert Bosch GmbH, 70442 Stuttgart (DE)
(72) Erfinder: Beelen, Hans, 3540, Herk de Stad (BE); Windmolders, Eric, 3510, Kermt (BE); Kaiser, Thomas, 76189, Karlsruhe (DE)

(56) Entgegenhaltungen:
- WO-A1-03/101797
- DE-A1- 3 639 831
- DE-A1-102006 036 777

## Beschreibung

### Technisches Gebiet

Die Erfindung betrifft Wischerblätter für Scheibenwischersysteme für Kraftfahrzeuge sowie Scheibenwischersysteme.

### Stand der Technik

Wischerblätter zum Einsatz in Kraftfahrzeugen sind aus dem Stand der Technik wohlbekannt. Wischerblätter sind in der Regel an Wischerarmen angebracht, so dass bei Verschwenken der Wischerarme eine Gummilippe des Wischerblattes die Windschutzscheibe des Kraftfahrzeuges überstreicht und dadurch Feuchtigkeit oder Tau von der Oberfläche der Windschutzscheibe des Kraftfahrzeugs abstreicht. Für verschiedene Kraftfahrzeugtypen werden verschiedene Typen von Wischerblättern eingesetzt, die sich in Länge, Material, Mechanik und weiteren Merkmalen unterscheiden können.

Wischerblätter sind Verbrauchsmaterialien, da sie durch Umwelteinflüsse wie z.B. Sonnenstrahlung, Verschmutzung und dergleichen altern bzw. durch Hindernisse auf der zu überstreichenden Fläche auf einer Windschutzscheibe des Kraftfahrzeuges beschädigt oder zerstört werden können. Üblicherweise werden daher die Wischerblätter bei einer regelmäßigen Wartung in einer Werkstatt ausgetauscht. Beim Austauschen in der Werkstatt werden die Wischerblätter in der Regel ohne weitere Prüfung ausgetauscht, da man annimmt, dass diese aufgrund der Alterung eine verschlechterte Wischqualität aufweisen, ohne dass eine genaue Prüfung des Zustands der Wischerblätter vorgenommen wird. Dies kann dazu führen, dass noch taugliche Wischerblätter ausgetauscht werden, wodurch unnötigerweise ein erhöhter Verbrauch an Wischerblättern entsteht.

Alternativ können die Wischerblätter durch den Fahrer selbst ausgetauscht werden, wenn er anhand einer mangelnden Wischqualität erkennt, dass die Wischerblätter abgenutzt oder beschädigt sind. Jedoch werden bei einer Überprüfung durch den Fahrer die Wischerblätter in der Regel erst dann ausgetauscht, wenn die Sicht durch die Windschutzscheibe bei einer Fahrt durch Regen stark beeinträchtigt ist, so dass in der Regel ein weiterer Zeitraum vergeht, bevor der Fahrer die Wischerblätter austauschen kann. Während dieses Zeitraums ist ein Fahren bei Regen aufgrund eingeschränkter Sicht durch die Windschutzscheibe mit einer erhöhten Gefährdung von Fahrer und Insassen verbunden.

Die DE 10 2006 036 777 A1 offenbart ein gattunsgemäßes Wischerblatt, das ein Trägerelement zum Halten einer Wischlamelle umfasst.

Es ist Aufgabe der vorliegenden Erfindung, ein Wischerblatt für einen Scheibenwischer zur Verfügung zu stellen, das einerseits in vereinfachter Weise durch ein Wischerblatt des gleichen Typs ausgetauscht werden kann und bei dem andererseits der Zeitpunkt des Austauschens besser an den Alterungszustand des Wischerblatts angepasst werden kann. Weiterhin ist es Aufgabe der vorliegenden Erfindung, ein Scheibenwischersystem zur Verfügung zu stellen, bei dem der Zeitpunkt des Austauschens besser an den Alterungs- bzw. Beschädigungszustand des Wischerblattes angepasst ist.

### Offenbarung der Erfindung

Diese Aufgabe wird durch das Wischerblatt gemäß Anspruch 1 und durch das Scheibenwischersystem und das Kraftfahrzeug mit einem Scheibenwischersystem gemäß den nebengeordneten Ansprüchen gelöst.

Weitere vorteilhafte Ausgestaltungen der Erfindung sind in den abhängigen Ansprüchen angegeben.

Gemäß einem ersten Aspekt ist ein Wischerblatt für ein Scheibenwischersystem eines Kraftfahrzeugs vorgesehen. Das Wischerblatt umfasst:
- ein Trägerelement zum Halten einer Wischlamelle;
- eine Identifikationseinheit mit einem Speicher zum Speichern von Daten, wobei die Identifikationseinheit ausgebildet ist, um die Daten berührungslos zu übertragen.

Eine Idee bezüglich des obigen Wischerblatts besteht darin, dieses mit einem berührungslos auslesbaren Speicher zu versehen, um Daten, z.B. eine bestimmte Typennummer oder Seriennummer des Wischerblatts, die in dem Speicher gespeichert sind, auf elektrischem Weg auslesbar bereitzustellen. Auf diese Weise können beim Neukauf eines Wischerblatts keine Verwechslungen mehr auftreten, wenn der Fahrer beim Wechsel des Wischerblatts das auszutauschende Wischerblatt in der Verkaufsstelle mit Hilfe eines entsprechenden Lesegeräts identifizieren bzw. auslesen lässt, um Daten, die der Identifikation des Wischerblattes dienen, wie z.B die Serien- bzw. Typennummer des Wischerblatts, festzustellen und anhand der festgestellten Daten zu entscheiden, welches neue Wischerblatt das auszutauschende Wischerblatt ersetzen soll.

Weiterhin kann vorgesehen sein, dass die Identifikationseinheit ein Übertragungselement, insbesondere eine Schleifenantenne oder eine Dipolantenne, aufweist.

Der Speicher kann ausgebildet sein, eine Seriennummer und/oder eine Identifikationsnummer bereitzustellen.

Insbesondere kann die Identifikationseinheit als ein RFID-Element, insbesondere als ein RFID-Element auf einer Klebefolie, die auf das Trägerelement geklebt ist, ausgebildet sein.

Gemäß einer Ausführungsform kann die Identifikationseinheit einen Sensor, insbesondere einen UV-Licht-Sensor oder einen Temperatursensor, aufweisen, um eine Angabe über einen Alterungszustand des Wischerblattes zu erfassen und eine entsprechende Angabe in dem Speicher zu speichern.

Gemäß einem weiteren Aspekt ist ein Scheibenwischersystem für ein Kraftfahrzeug vorgesehen. Das Scheibenwischersystem umfasst:
- das obige Wischerblatt, das an einem Wischerarm angebracht ist, so dass bei einem Bewegen des Wischerarms das Wischerblatt über die Oberfläche einer Windschutzscheibe streicht;
- eine Kommunikationseinheit, die so angeordnet ist, dass in einem Lagebereich des Wischerblattes eine Kommunikationsverbindung mit der Identifikationseinheit aufbaubar ist.

Bei einem solchen Scheibenwischersystem ist also vorgesehen, dass der berührungslos auslesbare Speicher der Identifikationseinheit des Wischerblattes zumindest in dem Lagebereich, z.B. einer Parkposition, durch die Kommunikationseinheit an der Windschutzscheibe auslesbar ist. Dadurch ist es beispielsweise möglich, bei Einsetzen des neuen Wischerblatts den Zeitpunkt des Einsetzens in den Wischerarm durch Feststellen einer Änderung der durch den Speicher bereitgestellten Daten festzustellen und zu speichern. Dies ermöglicht es, die gesamte Betriebszeit bzw. Einsatzzeit des Wischerblattes zu bestimmen und zu entscheiden, wann dieses gewechselt werden sollte.

Gemäß einer Ausführungsform kann eine Steuereinheit vorgesehen sein, die mit der Kommunikationseinheit in Verbindung steht, wobei die Steuereinheit ausgebildet ist, um einen Zykluszähler zu inkrementieren, sobald eine Bewegung des Wischerblattes bezüglich des Lagebereichs des Wischerblattes erkannt wird, und einen Zählerwert des Zykluszählers als Alterungsinformation bereitzustellen.

Weiterhin kann bei dem obigen Scheibenwischersystem mit dem Wischerblatt mit einem Sensor vorgesehen sein, dass die Steuereinheit ausgebildet ist, um über die Kommunikationseinheit die Angabe über den Alterungszustand zu empfangen und das Inkrementieren des Zykluszählers abhängig von der Angabe des Alterungszustands durchzuführen.

Gemäß einer Ausführungsform kann die Identifikationseinheit einen Zykluszähler aufweisen, wobei die Identifikationseinheit ausgebildet ist, den Zykluszähler abhängig von einem von der Kommunikationseinheit empfangenen Signal zu inkrementieren.

Weiterhin kann das Scheibenwischersystem mit einem Wischerblatt mit dem Sensor vorgesehen sein, wobei die Identifikationseinheit ausgebildet ist, den Zykluszähler abhängig von der Angabe über den Alterungszustand zu inkrementieren.

Gemäß einem weiteren Aspekt ist ein Verfahren zum Betreiben des obigen Wischerblattes in dem obigen Scheibenwischersystem vorgesehen. Das Verfahren umfasst die folgenden Schritte:
- Detektieren einer Wischbewegung des Wischerblattes bezüglich eines Lagebereichs auf einer Windschutzscheibe eines Kraftfahrzeugs;
- Inkrementieren eines Zykluszählers abhängig von der detektierten Wischbewegung;
- Bereitstellen des Zählerwerts des Zykluszählers als Altersinformation des Wischerblattes.

### Kurzbeschreibung der Zeichnungen

Ausführungsformen des Wischerblatts des Scheibenwischersystems sind nachfolgend anhand der beigefügten Zeichnungen näher erläutert. Es zeigen:
- Figur 1: eine schematische Darstellung eines Wischerblatts mit einem RFID-Element;
- Figur 2: eine Draufsicht auf ein RFID-Element;
- Figur 3: eine schematische Darstellung eines Scheibenwischersystems für eine Windschutzscheibe eines Kraftfahrzeugs.

### Beschreibung von Ausführungsformen

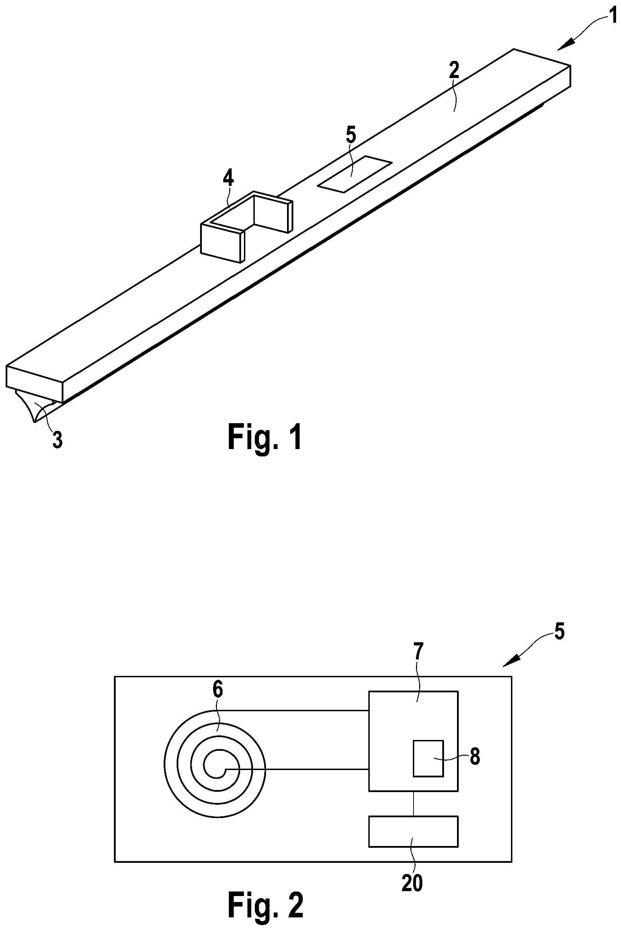

Figur 1 zeigt eine schematische Darstellung eines Wischerblatts 1 gemäß einer Ausführungsform. Das Wischerblatt 1 umfasst einen länglichen Träger 2, an dem eine Wischlamelle 3, z.B. in Form einer Gummilippe angeordnet ist. Die Wischlamelle 3 erstreckt sich in Längsrichtung über einen Teil der Länge bzw. über die gesamte Länge des Trägers 2, so dass bei einem Überstreichen des Wischerblatts 1 über eine Oberfläche in Querrichtung, wie z.B. über eine Windschutzscheibe eines Fahrzeugs, die Wischlamelle 3 über die Oberfläche gleitet und dort in Form von Tropfen oder Tau abgelagerte Feuchtigkeit abstreicht.

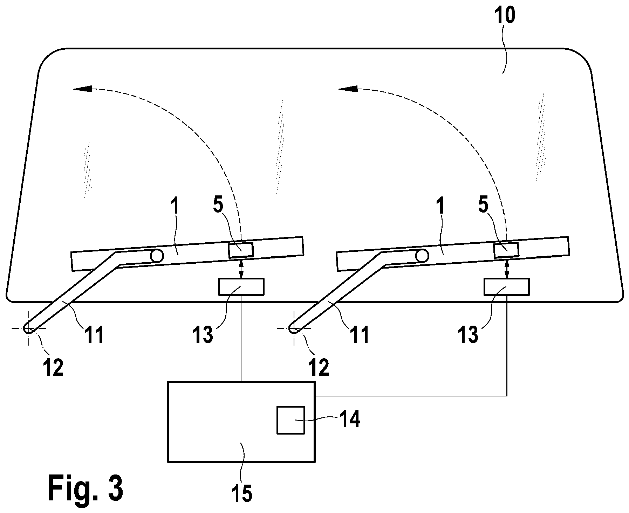

Das Wischerblatt 1 umfasst weiterhin eine Halterung 4, die an einer der Wischlamelle 3 gegenüberliegenden Seite des Trägers 2 angeordnet ist, so dass ein Wischerarm (siehe Figur 3), der schwenkbar an einem Fahrzeug (nicht gezeigt) angeordnet ist, an seinem der Schwenkachse gegenüberliegenden Ende an der Halterung 4 befestigbar ist. Dadurch wird das Wischerblatt 1 in einer Schwenkbewegung über die Windschutzscheibe des Kraftfahrzeugs bewegt, um so eine Wischbewegung in bekannter Weise auszuführen.

An dem Träger 2 des Wischerblatts 1 ist weiterhin eine Identifikationseinheit 5 angeordnet, die geeignet ist, eine Information bereitzustellen, so dass diese berührungslos ausgelesen werden kann.

In Figur 2 ist die Identifikationseinheit 5 schematisch detaillierter dargestellt. Die Identifikationseinheit 5 umfasst eine Antenne 6, die vorzugsweise in Form einer Schleifenantenne mit wenigen Windungen ausgebildet sein kann. Die Antenne 6 steht in elektrischer Verbindung mit einer Informationsbereitstellungseinheit 7. Alternativ kann die Antenne 6 auch als eine Dipolantenne ausgebildet sein.

Die Identifikationseinheit 5 kann beispielsweise als sogenannte RFID (Radio Frequency Identification Device)-Einheit ausgebildet sein, wie sie in herkömmlicher Weise zur Kennzeichnung von Waren verwendet werden kann. Gemäß der dargestellten Ausführungsform umfasst die Identifikationseinheit 5 eine Informationsbereitstellungseinheit 7 mit einem Speicher 8, so dass eine in dem Speicher 8 bereitgestellte Information über die Antenne 6 berührungslos bzw. kontaktierungslos ausgelesen werden kann. Damit ist es möglich, eine in dem Speicher 8 gespeicherte Information über einen Typ des Wischerblatts 1 und/oder eine Seriennummer des Wischerblatts 1 und/oder eines Herstellungsdatums des Wischerblatts 1 zu speichern.

Diese Informationen können in montiertem und/oder demontiertem Zustand von dem Wischerblatt 1 mit Hilfe eines aus dem Stand der Technik bekannten, geeigneten Lesegeräts ausgelesen werden. Dadurch ist es einem Benutzer beim Austauschen des Wischerblatts 1 in einfacher Weise möglich, die Information über den Typ des Wischerblatts 1 und/oder die Seriennummer auszulesen, ein gleiches oder dazu kompatibles Wischerblatt durch Vergleichen mit der ausgelesenen Information zu identifizieren und das auszutauschende Wischerblatt durch ein neues Wischerblatt gleichen oder vergleichbaren Typs zu ersetzen. Weiterhin kann der Speicher 8 der Informationsbereitstellungseinheit 7 beschreibbar ausgebildet sein, so dass z.B. bei einem Kauf des Wischerblatts mit Hilfe des Lesegeräts eine Angabe des aktuellen Datums an die Informationsbereitstellungseinheit 5 übertragen wird und entsprechend in den Speicher geschrieben wird, so dass durch späteres Auslesen der Identifikationseinheit 5, z.B. mit Hilfe eines tragbaren Handlesegeräts für RFID-Elemente, die Dauer feststellbar ist, während der das Wischerblatt 1 im Einsatz ist.

In Figur 3 ist ein Scheibenwischersystem dargestellt, bei dem eine Windschutzscheibe 10 mit Hilfe von zwei Wischerblättern 1 gereinigt werden kann. Die beiden Wischerblätter 1 sind an jeweiligen Wischerarmen 11 verschwenkbar angeordnet, so dass durch Verschwenken der Wischerarme um eine Schwenkachse 12 die Wischerblätter 1 über die Windschutzscheibe 10 in einer Schwenkrichtung (gestrichelte Pfeile) bewegt werden können. An einer Position der Windschutzscheibe 10 kann ein Kommunikationselement 13 angeordnet sein, wobei für jedes Wischerblatt 1 bzw. für mindestens eines der Wischerblätter 1 ein Kommunikationselement 13 so angeordnet ist, dass bei einer bestimmten Position des Wischerblatts 1 auf der Windschutzscheibe 10 die Identifikationseinheit 5 und das Kommunikationselement 13 übereinander in Richtung einer Flächennormalen der Windschutzscheibe 10 zu liegen kommen. Dadurch können das Kommunikationselement 13 und die Identifikationseinheit 5 miteinander kommunizieren.

Vorzugsweise ist das Kommunikationselement 13 so an der Windschutzscheibe 10 angeordnet, dass die Identifikationseinheit 5 des jeweiligen Wischerblatts 1 bezüglich der Flächennormalen der Windschutzscheibe 10 über dem Kommunikationselement 13 zu liegen kommt, wenn sich die Wischerblätter 1 bzw. das mindestens eine Wischerblatt 1 in einer Parkposition befinden. Selbstverständlich ist es auch möglich, die Kommunikationselemente 13 so anzuordnen, dass die Identifikationseinheiten 5 des jeweiligen Wischerblatts 1 in einer anderen Position über dem Kommunikationselement 13 zu liegen kommen.

Da es sich bei RFID-Elementen um Elemente handelt, die für eine Nahbereichskommunikation ausgelegt sind, findet die optimale Kommunikation zwischen dem Kommunikationselement 13 und der Identifikationseinheit 5 dann statt, wenn diese bezüglich der Windschutzscheibe 10 übereinander angeordnet sind. Um eine optimale Kommunikation zu gewährleisten, ist die Antenne 6 vorzugsweise so angeordnet, dass sich die Wicklungsebene der Windungen der Schleifenantenne im Wesentlichen parallel zur Windschutzscheibe 10 erstreckt.

Beim Einbau bzw. beim Austausch der Wischerblätter 1 durch Demontage der gebrauchten Wischerblätter und Neumontage von neuen Wischerblättern 1 durch Befestigen der Halterung 4 an den den Schwenkachsen 12 gegenüberliegenden Enden der Wischerarme 11 erfolgt eine Kommunikation zwischen dem Kommunikationselement 13 und der Identifikationseinheit 5. Bei dieser Kommunikation kann das Kommunikationselement 13, gesteuert durch eine Steuereinheit 15, das aktuelle Datum oder eine sonstige Zeitangabe für den Einbauzeitpunkt an die Identifikationseinheit 5 des jeweiligen Wischerblatts 1 übertragen, so dass die Verarbeitungseinheit 7 der Identifikationseinheit 5 Angaben über das aktuelle Datum in dem in der Identifikationseinheit 5 befindlichen Speicher speichert.

Alternativ kann in der Identifikationseinheit 5 auch ein Zykluszähler vorgesehen sein, der die Anzahl von Wischvorgängen, d.h. Schwenkbewegungen, über die Windschutzscheibe 10 zählt, indem der Zykluszähler immer dann inkrementiert wird, wenn die Identifikationseinheit 5 über das Kommunikationselement 13 gelangt bzw. diese Position aufgrund einer Wischbewegung wieder verlässt. Ein solcher Zykluszähler kann auch in der Steuereinheit 15 vorgesehen sein, so dass ein Inkrementieren immer dann erfolgt, wenn ein bestimmter Zustandswechsel bei einer Erkennung der Lage des Wischerblatts 1 detektiert worden ist. In Fig. 3 ist der Zykluszähler in der Steuereinheit 15 mit dem Bezugszeichen 14 dargestellt.

Alternativ kann beim Einbau eines neuen Wischerblattes, was durch eine Änderung einer nach dem Einbau ausgelesenen eindeutigen Seriennummer durch Änderung bezüglich einer zuvor erkannten Seriennummer feststellbar ist, in der Steuereinheit 15 ein Einbauzeitpunkt als Zeitpunkt des ersten Erkennens der Seriennummer gespeichert werden, so dass in der Steuereinheit 15 mit Hilfe einer Angabe des aktuellen Zeitpunktes eine Altersangabe errechenbar ist. Die Steuereinheit 15 kann einem Fahrer durch eine geeignete Ausgabeeinheit signalisieren, wenn die Wischerblätter 1 ein vorgegebenes Alter erreicht haben, so dass der Fahrer über einen Austausch der Wischerblätter entscheiden kann.

Es kann weiterhin vorgesehen sein, dass eine Kommunikation zwischen der Identifikationseinheit 5 und dem Kommunikationselement 13 immer dann stattfindet, wenn die Identifikationseinheit 5 und das Kommunikationselement 13 übereinander liegen. Dazu sendet die Kommunikationseinheit 13 regelmäßig oder zu vorgegebenen Zeitpunkten Anfragesignale an die Identifikationseinheit 5 aus. Abhängig von dem Empfangen eines Antwortsignals kann dann der Zykluszähler 14 inkrementiert werden. Die Steuereinheit 15 stellt dann den Zählerwert des Zykluszählers 14 als Angabe über den Alterungszustand dea Wischerblattes 1 zum Auslesen bereit.

Die Anzahl der mit Hilfe des Zykluszählers 14 ermittelten Wischzyklen stellt eine Angabe über die Alterung des Wischerblatts 1 dar. Das Vorsehen des Zykluszählers in der Identifikationseinheit 5 des Wischerblatts 1 anstatt in der Steuereinheit 15 hat daher den Vorteil, dass bei einem Demontieren der Wischerblätter 1 von dem Fahrzeug und Montieren der gebrauchten Wischerblätter 1 auf ein anderes Fahrzeug die Alterungsinformation in Form einer Angabe der Wischzyklen nicht verlorengeht, sondern in dem Fahrzeug, das mit den gebrauchten Wischerblättern 1 ausgestattet worden ist, ordnungsgemäß zur Verfügung steht.

Die Identifikationseinheit 5 kann weiterhin mit einem oder mehreren Sensoren 20 ausgestattet sein, die in der Lage sind, Umgebungsbedingungen zu erfassen, die zu einem schnelleren oder langsameren Altern des Wischerblatts 1 beitragen. So kann beispielsweise ein UV-Licht-Sensor vorgesehen sein, der die Zeit misst, während der das Wischerblatt 1 dem Sonnenlicht ausgesetzt ist und dadurch schneller altert als ein nicht UV-Licht ausgesetztes Wischerblatt. Der UV-Licht-Sensor kann beispielsweise ein chemischer Sensor sein, der eine Widerstandsschicht darstellt, deren Widerstand sich abhängig von einem kumulierten UV-Licht-Eintrag über die Zeit ändert. Der Widerstand der Widerstandsschicht stellt dann ein Maß für die UV-Licht-bedingte Alterung des Wischerblattes 1 dar. Allgemein können sich auch andere elektrische Eigenschaften des UV-Licht-Sensors abhängig von dem UV-Licht-Eintrag ändern.

Alternativ oder zusätzlich kann auch die Umgebungstemperatur erfasst werden und bei der Bewertung des Zustands des Wischerblatts in der Steuereinheit 15 berücksichtigt werden. Bei einem Zählen der Wischzyklen in einem in der Identifikationseinheit 5 befindlichen Zykluszähler kann das Inkrementieren bei einem Wischvorgang mit einem gewichteten Wert erfolgen, wobei die Gewichtung von der Umgebungstemperatur abhängt. Auf diese Weise kann der erhöhte Verschleiß des Wischerblattes 1 bei einem Wischen bei niedrigen Umgebungstemperaturen berücksichtigt werden.

Der Temperatursensor kann beispielsweise ein bestimmtes Material enthalten, das seine elektrischen Eigenschaften abhängig von dem Verlauf der Umgebungstemperatur ändert, so dass durch Auswerten der elektrischen Eigenschaften des Materials des Sensors Rückschlüsse auf die Alterung des Wischerblatts 1 gezogen werden können.

## Patentansprüche

1. Wischerblatt (1) für ein Scheibenwischersystem eines Kraftfahrzeugs, umfassend:
- ein Trägerelement (2) zum Halten einer Wischlamelle (3);
- eine Identifikationseinheit (5) mit einem Speicher zum Speichern von Daten, wobei die Identifikationseinheit (5) ausgebildet ist, um die Daten berührungslos zu übertragen.

2. Wischerblatt (1) nach Anspruch 1, wobei die Identifikationseinheit ein Übertragungselement, insbesondere eine Schleifenantenne oder eine Dipolantenne, aufweist.

3. Wischerblatt (1) nach Anspruch 1 oder 2, wobei der Speicher ausgebildet ist, eine Seriennummer und/oder eine Identifikationsnummer bereitzustellen.

4. Wischerblatt (1) nach einem der Ansprüche 1 bis 3, wobei die Identifikationseinheit (5) als ein RFID-Element, insbesondere als ein RFID-Element auf einer Klebefolie, die auf das Trägerelement (2) geklebt ist, ausgebildet ist.

5. Wischerblatt (1) nach einem der Ansprüche 1 bis 4, wobei die Identifikationseinheit (5) einen Sensor, insbesondere einen UV-Licht-Sensor oder einen Temperatursensor, aufweist, um eine Angabe über einen Alterungszustand des Wischerblattes zu erfassen und eine entsprechende Angabe in dem Speicher zu speichern.

6. Scheibenwischersystem für ein Kraftfahrzeug, umfassend:
- ein Wischerblatt (1) nach einem der vorangehenden Ansprüche, wobei das Wischerblatt (1) an einem Wischerarm angebracht ist, so dass bei einem Bewegen des Wischerarms das Wischerblatt über die Oberfläche einer Windschutzscheibe (10) streicht;
- eine Kommunikationseinheit (13), die so angeordnet ist, dass in einem Lagebereich des Wischerblattes (1) eine Kommunikationsverbindung mit der Identifikationseinheit (5) aufbaubar ist.

7. Scheibenwischersystem nach Anspruch 6, wobei eine Steuereinheit (15) vorgesehen ist, die mit der Kommunikationseinheit (13) in Verbindung steht, wobei die Steuereinheit (15) ausgebildet ist, um einen Zykluszähler (14) zu inkrementieren, sobald eine Bewegung des Wischerblattes (1) bezüglich des Lagebereichs des Wischerblattes (1) erkannt wird, und einen Zählerwert des Zykluszählers (14) als Alterungsinformation bereitzustellen.

8. Scheibenwischersystem nach Anspruch 7 und mit dem Wischerblatt nach Anspruch 5, wobei die Steuereinheit (15) ausgebildet ist, um über die Kommunikationseinheit (13) die Angabe über den Alterungszustand zu empfangen und das Inkrementieren des Zykluszählers (14) abhängig von der Angabe des Alterungszustands durchzuführen.

9. Scheibenwischersystem nach Anspruch 6, wobei die Identifikationseinheit (5) einen Zykluszähler (14) aufweist, wobei die Identifikationseinheit (5) ausgebildet ist, den Zykluszähler (14) abhängig von einem von der Kommunikationseinheit (13) empfangenen Signal zu inkrementieren.

10. Scheibenwischersystem nach Anspruch 9 mit einem Wischerblatt (1) nach Anspruch 5, wobei die Identifikationseinheit (5) ausgebildet ist, den Zykluszähler (14) abhängig von der Angabe über den Alterungszustand zu inkrementieren.

11. Verfahren zum Betreiben eines Wischerblattes nach einem der Ansprüche 1 bis 5 in einem Scheibenwischersystem nach Anspruch 6, mit folgenden Schritten:
- Detektieren einer Wischbewegung des Wischerblattes (1) bezüglich eines Lagebereichs auf einer Windschutzscheibe (10) eines Kraftfahrzeugs;
- Inkrementieren eines Zykluszählers (14) abhängig von der detektierten Wischbewegung;
- Bereitstellen des Zählerwerts des Zykluszählers (14) als Altersinformation des Wischerblattes (1).

## Claims

1. Wiper blade (1) for a screen wiper system of a motor vehicle, comprising:
- a support element (2) for holding a wiping lamella (3) ;
- an identification unit (5) with a memory for storing data, wherein the identification unit (5) is designed to transmit the data contactlessly.

2. Wiper blade (1) according to Claim 1, wherein the identification unit has a transmission element, in particular a loop antenna or a dipole antenna.

3. Wiper blade (1) according to Claim 1 or 2, wherein the memory is designed to provide a series number and/or an identification number.

4. Wiper blade (1) according to one of Claims 1 to 3, wherein the identification unit (5) is designed as an RFID element, in particular as an RFID element on an adhesive film which is adhesively bonded onto the support element (2).

5. Wiper blade (1) according to one of Claims 1 to 4, wherein the identification unit (5) has a sensor, in particular a UV light sensor or a temperature sensor, in order to sense information about an aging state of the wiper blade and to store appropriate information in the memory.

6. Screen wiper system for a motor vehicle, comprising:
- a wiper blade (1) according to one of the preceding claims, wherein the wiper blade (1) is attached to a wiper arm, and therefore the wiper blade brushes over the surface of a windscreen (10) during a movement of the wiper arm;
- a communication unit (13) which is arranged in such a manner that a communication connection with the identification unit (5) can be established in one positional region of the wiper blade (1).

7. Screen wiper system according to Claim 6, wherein a control unit (15) is provided which is connected to the communication unit (13), wherein the control unit (15) is designed to increment a cycle counter (14) as soon as a movement of the wiper blade (1) with respect to the positional region of the wiper blade (1) is detected, and in order to provide a counter value of the cycle counter (14) as aging information.

8. Screen wiper system according to Claim 7 and with the wiper blade according to Claim 5, wherein the control unit (15) is designed to receive the information about the aging state via the communication unit (13) and to carry out the incrementing of the cycle counter (14) depending on the information about the aging state.

9. Screen wiper system according to Claim 6, wherein the identification unit (5) has a cycle counter (14), wherein the identification unit (5) is designed to increment the cycle count (14) depending on a signal received by the communication unit (13).

10. Screen wiper system according to Claim 9 with a wiper blade (1) according to Claim 5, wherein the identification unit (5) is designed to increment the cycle counter (14) depending on the information about the aging state.

11. Method for operating a wiper blade according to one of Claims 1 to 5 in a screen wiper system according to Claim 6, comprising the following steps:
- detecting a wiping movement of the wiper blade (1) with respect to a positional region on a windscreen (10) of a motor vehicle;
- incrementing a cycle counter (14) depending on the detected wiping movement;
- providing the counter value of the cycle counter (14) as age information of the wiper blade (1).

## Revendications

1. Balai d'essuie-glace (1), destiné à un système d'essuie-glace d'un véhicule automobile, comprenant :
- un élément de support (2) destiné à supporter un balai d'essuie-glace (3) ;
- une unité d'identification (5) comportant une mémoire destinée à stocker des données, l'unité d'identification (5) étant adaptée pour transmettre les données sans contact.

2. Balai d'essuie-glace (1) selon la revendication 1, l'unité d'identification comprenant un élément de transmission, notamment une antenne cadre ou une antenne dipôle.

3. Balai d'essuie-glace (1) selon la revendication 1 ou 2, la mémoire étant conçue pour fournir un numéro de série et/ou un numéro d'identification.

4. Balai d'essuie-glace (1) selon l'une des revendications 1 à 3, l'unité d'identification (5) étant conçue sous la forme d'un élément RFID, en particulier d'un élément RFID placé sur un film adhésif qui est collé à l'élément de support (2).

5. Balai d'essuie-glace (1) selon l'une des revendications 1 à 4, l'unité d'identification (5) comprenant un capteur, notamment un capteur de lumière UV ou un capteur de température, pour détecter une indication d'un état de vieillissement du balai d'essuie-glace et pour stocker une indication correspondante dans la mémoire.

6. Système d'essuie-glace, destiné à un véhicule automobile, comprenant :
- un balai d'essuie-glace (1) selon l'une des revendications précédentes, le balai d'essuie-glace (1) étant fixé à un bras d'essuie-glace de sorte que, lors du déplacement du bras d'essuie-glace, le balai d'essuie-glace frotte contre la surface d'un pare-brise (10) ;
- une unité de communication (13) qui est agencée de manière à pouvoir établir, dans une gamme de positions du balai d'essuie-glace (1), une liaison de communication avec l'unité d'identification (5).

7. Système d'essuie-glace selon la revendication 6, une unité de commande (15) étant prévue qui est en liaison avec l'unité de communication (13), l'unité de commande (15) étant conçue pour incrémenter un compteur de cycles (14) dès que le mouvement du balai d'essuie-glace (1) par rapport à la plage de positions du balai d'essuie-glace (1) est détecté et pour fournir une valeur du compteur de cycles (14) comme information de vieillissement.

8. Système d'essuie-glace selon la revendication 7 et incluant le balai d'essuie-glace selon la revendication 5, l'unité de commande (15) étant conçue pour recevoir l'indication de l'état de vieillissement par le biais de l'unité de communication (13) et pour effectuer l'incrémentation du compteur de cycles (14) en fonction de l'indication de l'état de vieillissement.

9. Système d'essuie-glace selon la revendication 6, l'unité d'identification (5) comprenant un compteur de cycles (14), l'unité d'identification (5) étant conçue pour incrémenter le compteur de cycles (14) en fonction d'un signal reçu par l'unité de communication (13).

10. Système d'essuie-glace selon la revendication 9 comprenant un balai d'essuie-glace (1) selon la revendication 5, l'unité d'identification (5) étant conçue pour incrémenter le compteur de cycles (14) en fonction de l'indication de l'état de vieillissement.

11. Procédé de fonctionnement d'un balai d'essuie-glace selon l'une quelconque des revendications 1 à 5 dans un système d'essuie-glace selon la revendication 6, le procédé comprenant les étapes suivantes :
- détecter un mouvement d'essuyage du balai d'essuie-glace (1) par rapport à une gamme de positions sur un pare-brise (10) d'un véhicule automobile ;
- incrémenter un compteur de cycles (14) en fonction du mouvement de balayage détecté ;
- fournir la valeur du compteur de cycles (14) comme information de vieillissement du balai d'essuie-glace (1) .
